# FASCICULE DE BREVET EUROPEEN

(11) **EP 3 717 347 B1**
(45) Date de publication et mention de la délivrance du brevet: **03.09.2025**
(21) Numéro de dépôt: 18807338.1
(22) Date de dépôt: 26.11.2018
(51) Int. Cl.: B63G 8/04, B63G 8/38, H01Q 1/34

(54) **MÂT DE BÂTIMENT MARIN OU SOUS-MARIN**
MAST FÜR EIN SCHIFF ODER UNTERWASSERSCHIFF
MAST FOR A MARINE OR SUBMARINE VESSEL

(30) Priorité: 27.11.2017 FR 1701243
(43) Date de publication de la demande: 07.10.2020
(73) Titulaire: Naval Group, 75015 Paris (FR)
(72) Inventeur: PAUMIER, Philippe, 16600 Ruelle Sur Touvre (FR); TROUVE, Arnaud, 16600 Ruelle Sur Touvre (FR)
(74) Mandataire: Lavoix
(86) Numéro de dépôt international: PCT/EP2018/082609
(87) Numéro de publication internationale: WO 2019/102015

(56) Documents cités:
- EP-A1- 0 269 893
- AU-B1- 475 918
- FR-A1- 2 288 671
- JP-A- 2001 278 190
- US-A1- 2014 182 500
- US-B1- 6 411 260

## Description

La présente invention concerne un mât du type destiné à équiper un bâtiment marin ou sous-marin, le mât comprenant une structure métallique s'étendant selon un axe et un carénage disposé extérieurement par rapport à la structure selon une direction normale à l'axe. L'invention concerne également un bâtiment marin ou sous-marin comportant un tel mât.

Le document EP 0 269 893 A1 décrit mât d'antenne déployable, en particulier pour des sous-marins.

Les bâtiments marins ou sous-marins présentent usuellement des superstructures arrangées sous forme de mâts, servant notamment à porter des instruments de mesure et de communication, comme des capteurs ou des antennes.

Dans le cas des bâtiments sous-marins, ces mâts comprennent également en général un périscope utilisé pour percevoir les environs au cours de la plongée, ainsi qu'un tube d'air frais destiné à permettre le fonctionnement des moteurs du bâtiment nécessitant un apport d'oxygène pour la combustion.

Il est connu de disposer un carénage autour de la structure métallique d'un tel mât afin d'améliorer les propriétés aérodynamiques et/ou hydrodynamiques du mât, ainsi que pour protéger la structure métallique. Le carénage se compose usuellement d'une peau composite, disposée autour de la structure métallique du mât, réalisée par exemple à partir d'une matrice de résine et de fibres de verre.

Un tel carénage présente cependant de nombreux inconvénients.

Tout d'abord, un tel carénage est peu résistant aux chocs, qui peuvent être fréquents notamment dans le cas des bâtiments sous-marins, pour lesquels le mât est immergé et peut rencontrer des objets dérivants. Les dégâts infligés au carénage peuvent alors nécessiter son remplacement complet.

Ensuite, un tel carénage ne permet pas d'accéder à la structure métallique du mât, et doit être détruit et remplacé lorsqu'un tel accès est nécessaire, lors d'opération de maintenance par exemple.

Enfin, un tel carénage est coûteux, et la procédure d'assemblage en est relativement complexe.

Un but de l'invention est donc de fournir un carénage de mât permettant un accès facilité à la structure du mât, et dont l'installation et l'entretien sont simplifiés.

A cet effet, l'invention concerne un mât selon la revendication 1.

Selon des modes de réalisation particuliers de l'invention, ce mât est selon l'une quelconque des revendications 2 à 8.

L'invention concerne également un bâtiment marin ou sous-marin comportant au moins un mât selon l'une quelconque des revendications 1 à 8.

L'invention sera mieux comprise à la lecture de la description qui va suivre, donnée uniquement à titre d'exemple et faite en se référant aux dessins annexés, parmi lesquels :
- la figure 1 est une vue de côté d'un bâtiment sous-marin selon l'invention ;
- la figure 2 est une vue de côté d'un mât selon un premier mode de réalisation de l'invention ;
- la figure 3 est une vue de détail éclatée du mât de la figure 2 ;
- la figure 4 est une vue en coupe horizontale du mât des figures 2 et 3 ;
- la figure 5 est une vue de côté partiellement éclatée d'un mât selon un deuxième mode de réalisation de l'invention ; et
- la figure 6 et une vue en coupe horizontale du mât de la figure 5.

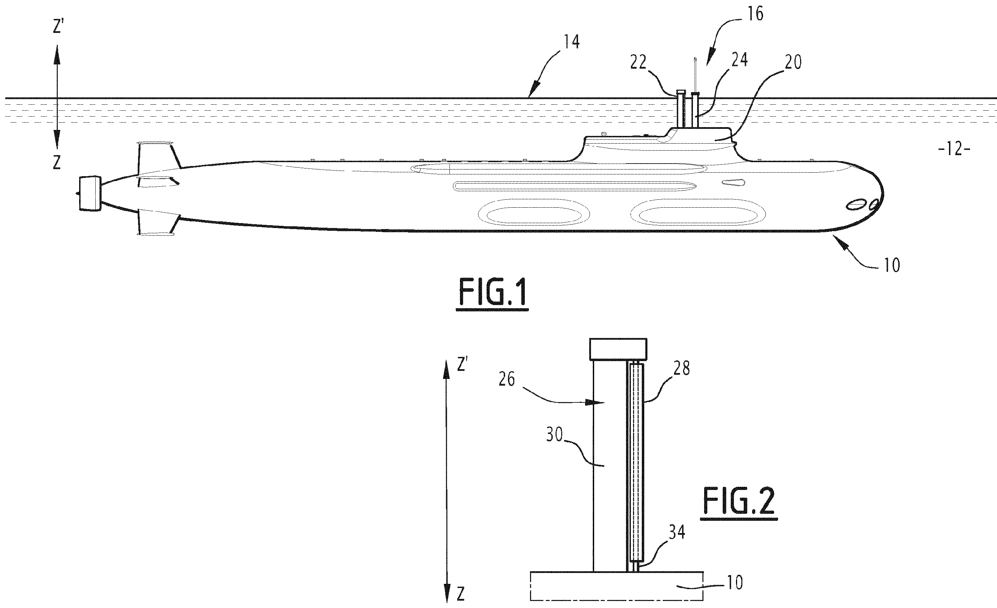

Sur la figure 1, un bâtiment sous-marin 10 est représenté en plongée dans une étendue d'eau 12, à une faible profondeur sous une surface 14 de l'étendue d'eau 12.

Le bâtiment sous-marin 10 comporte deux mâts 16, s'étendant à partir d'une tourelle 20 supérieure, les mâts 16 dépassant de la surface 14.

Les mâts 16 s'étendent selon un axe sensiblement vertical Z-Z', l'axe Z-Z' étant sensiblement normal à la surface 14.

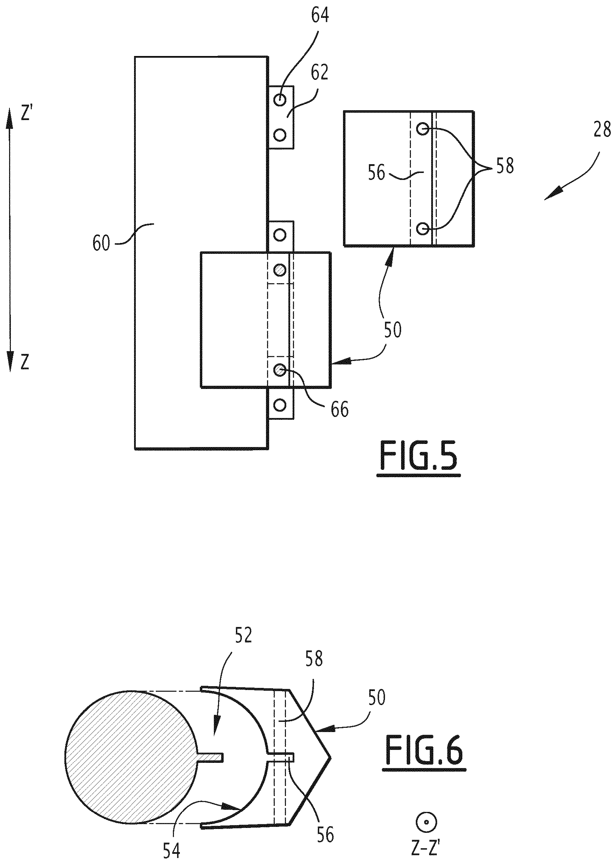

Les mâts 16 comprennent un tube d'air frais 22, correspondant à un premier mode de réalisation représenté en détail sur les figures 2 à 4, et un mât standard 24, correspondant à un deuxième mode de réalisation représenté en détail sur les figures 5 et 6.

Le tube d'air frais 22, également appelé snorkel, comporte une structure 26 métallique hissable s'étendant selon l'axe Z-Z' sensiblement vertical, et un carénage 28 disposé extérieurement par rapport à la structure 26 selon une direction normale à l'axe Z-Z'.

Comme représenté sur la figure 2, la structure 26 comprend un tube 30 définissant un conduit interne débouchant à une extrémité supérieure du tube 30, et adapté pour acheminer de l'air depuis l'extérieur jusqu'à l'intérieur du bâtiment 10 afin d'alimenter des moteurs du bâtiment 10.

La structure 26 comprend également une armature 34 s'étendant selon une direction sensiblement parallèle à l'axe Z-Z', en avant du tube 30 selon le sens de la marche du bâtiment sous-marin 10.

L'armature 34 est par exemple une barre présentant une forme allongée sensiblement cylindrique, solidaire du tube 30 à ses deux extrémités.

Le carénage 28 est assemblé de manière démontable sur la structure 26, et reçu par l'armature 34. Par démontable, on entend que le carénage 28 peut être démonté de la structure 26 sans endommager notablement ni le carénage 28 ni la structure 26, de sorte que le même carénage 28 peut ensuite être remonté sur la structure 26 sans nécessiter de réparations ou de remplacement.

Dans le premier mode de réalisation, le carénage 28 est assemblé par emboitage élastique sur l'armature 34.

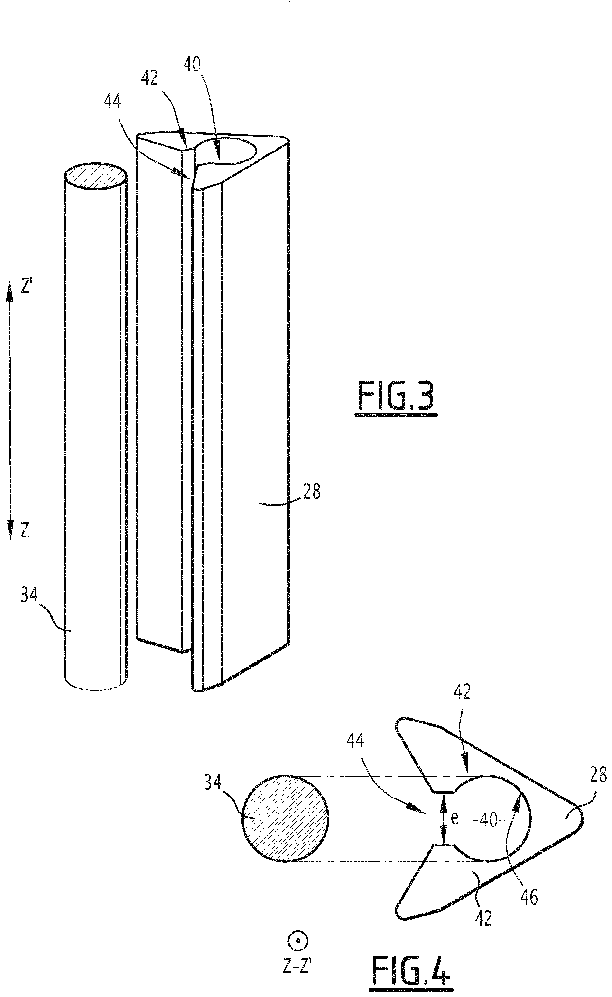

Le carénage 28 est représenté en détail sur les figures 3 et 4. Le carénage 28 présente une forme prismatique allongée selon une direction parallèle à l'axe Z-Z', avec une section en pointe de flèche sensiblement triangulaire, de façon à présenter un profil hydrodynamique.

Le carénage 28 définit un logement 40 sensiblement cylindrique adapté pour recevoir l'armature 34, le logement présentant un diamètre interne égal ou légèrement inférieur à un diamètre de l'armature 34.

Le carénage 28 comprend une partie déformable 42 définissant une ouverture 44 d'accès au logement 40.

Dans l'exemple représenté sur les figures 2 à 4, le carénage 28 est réalisé en une seule pièce à partir d'un matériau élastique, par exemple un élastomère. L'intégralité du carénage 28 constitue alors la partie déformable 42.

L'élastomère est par exemple une polyoléfine à haut poids moléculaire ou un caoutchouc naturel ou bien artificiel. L'élastomère présente avantageusement une dureté comprise entre 50 Shore A et 80 Shore A, avantageusement proche de 70 Shore A

En variante, le carénage 28 comprend plusieurs pièces réalisées à partir de matériaux différents, dont au moins l'une constitue la partie déformable 42.

Comme représenté sur la figure 4, l'ouverture 44 présente une largeur transversale e plus faible que le diamètre de l'armature 34. La partie déformable 42 est donc enserrée élastiquement autour de l'armature 34 et maintient le carénage 28 sur la structure 26.

L'ouverture 44 est apte à se déformer de façon à augmenter sa largeur transversale e de manière réversible et permettre le passage de l'armature 34 lors du montage et du démontage du carénage 28.

Avantageusement, une surface de contact 46 du carénage 28 sur l'armature 34 comporte un adhésif améliorant la fixation du carénage 28.

La surface de contact 46 s'étend autour du logement 40, en portion de cylindre.

L'adhésif est un adhésif réversible, c'est-à-dire un adhésif présentant une résistance modérée aux contraintes de cisaillement appliquées selon une direction sensiblement tangente à la surface de contact 46, et une résistance faible aux contraintes de pelage appliquées selon une direction sensiblement normale à la surface de contact 46. La fixation offerte par l'adhésif est du type connu par les appellations « collage temporaire », « collage repositionnable » ou « collage non permanent ».

Notamment, l'adhésif réversible présente une résistance en cisaillement inférieure à 5 MPa, avantageusement inférieure à 1,5 MPa, et une résistance au pelage inférieure à 2 MPa, avantageusement inférieure à 0,5 MPa.

La faible résistance de l'adhésif au pelage permet à l'assemblage du carénage 28 sur la structure 26 de rester démontable, en offrant une faible résistance au démontage par pelage du carénage 28 de l'armature 34.

L'adhésif prévient les mouvements du carénage en rotation autour de l'armature 34, qui sont associé à des contraintes de cisaillement pour lesquelles l'adhésif présente une résistance supérieure à celle aux contraintes de pelage.

Le carénage 28 selon le premier mode de réalisation est de plus résistant aux chocs avec des objets dérivant de par sa réalisation en matériau élastomère, et absorbe efficacement les vibrations dues à la trainée.

Dans le deuxième mode de réalisation, représenté en détail sur les figures 5 et 6, le mât standard 24 comprend une structure et un carénage comprenant une pluralité de segments 50 distincts assemblés sur la structure et alignés selon une direction parallèle à l'axe Z-Z'.

Deux segments 50 sont représentés sur la figure 5, l'un assemblé sur la structure et l'autre à l'écart de la structure.

Chaque segment 50 présente une forme prismatique allongée selon une direction parallèle à l'axe Z-Z', avec une section en pointe de flèche représentée en détail sur la figure 6.

Chaque segment 50 définit un logement 52 sensiblement demi-cylindrique délimité par une surface de contact 54 s'étendant sur une partie arrière du segment 50.

Les segments 50 sont par exemple réalisés à partir d'un matériau rigide, notamment une mousse syntactique comprenant une matrice en résine dans laquelle ont été injectées des sphères de verre creuses.

Chaque segment 50 définit également au moins une encoche 56 de fixation débouchant dans le logement 52 et s'étendant sur toute la hauteur du segment 50 selon la direction parallèle à l'axe Z-Z'.

Le segment 50 définit en outre deux ouvertures 58 traversantes sensiblement cylindriques, s'étendant selon une direction orthogonale à l'axe Z-Z', débouchant dans l'encoche 56 et sur des côtés opposés du segment 50.

Dans le second mode de réalisation, la structure comprend un poteau 60 s'étendant selon une direction parallèle à l'axe Z-Z' et une pluralité de supports 62 faisant saillie à partir du poteau 60 selon une direction orthogonale à l'axe Z-Z'.

Les supports 62 sont adaptés pour s'engager dans l'encoche 56 de chaque segment 50 lors de l'assemblage du segment 50 sur la structure, et ainsi maintenir le segment 50 contre la structure. Les supports 62 engagés dans l'encoche 56 préviennent tout mouvement de rotation du carénage 28 autour de la structure.

Dans l'exemple représenté, chaque support 62 définit deux orifices de fixation 64. Les orifices de fixation 64 sont agencés pour que les ouvertures 58 d'un des segments 50 débouchent sur les orifices de fixation 64 de deux supports 62 successifs lorsque le segment 50 est assemblé sur la structure.

Le carénage 28 comprend alors des organes de fixation 66 reçu dans les ouvertures 58 et les orifices 64 de façon à assurer la fixation du segment 50 sur la structure. Les organes de fixation 66 sont par exemple des boulons.

Dans une variante non représentée, les supports 62 présentent une forme en crochet et sont adaptés pour coopérer avec des pions disposés dans l'encoche 54 de façon à maintenir le segment 50 contre la structure sans organe de fixation 66.

Le mât 16 selon le deuxième mode de réalisation comprend un carénage 28 assemblé de manière démontable, puisque un ou plusieurs des organes de fixation 66 peuvent être retirés afin de démonter un ou plusieurs segments 50, qui peuvent ensuite être remontés tels quel.

Le carénage 28 permet de plus un remplacement partiel en cas de dégâts, par exemple en cas de choc avec un objet dérivant, en remplaçant les segments 50 endommagés uniquement.

La réalisation du carénage 28 en mousse syntactique lui permet de présenter une excellente résistance aux pressions hydrostatiques, tout en conservant une densité suffisamment faible.

## Revendications

1. Mât (16) destiné à équiper un bâtiment (10) marin ou sous-marin, le mât (16) comprenant une structure (26) métallique s'étendant selon un axe (Z-Z') et un carénage (28) disposé extérieurement par rapport à la structure (26) selon une direction normale à l'axe (Z-Z'),
**caractérisé en ce que** le carénage (28) est assemblé de manière démontable à la structure (26), par démontable étant entendu que le carénage (28) peut être démonté de la structure (26) sans endommager ni le carénage (28) ni la structure (26), la structure (26) comprenant un poteau (60) s'étendant selon une direction parallèle à l'axe (Z-Z), la structure (26) comportant une pluralité de supports (62) faisant saillie depuis le poteau (60), le carénage (28) définissant une encoche (56) recevant les supports (62), les supports (62) maintenant le carénage (28) contre la structure (26), chaque support (62) définissant au moins un orifice de fixation (64), le carénage (28) définissant au moins une ouverture (58) adaptée pour déboucher sur l'orifice de fixation (64) lorsque le carénage (28) est assemblé à la structure (26), l'orifice de fixation (64) et les ouvertures (58) étant propres à recevoir un organe de fixation (66) du carénage (28) à la structure (26).

2. Mât (16) selon la revendication 1, dans lequel le carénage (28) est assemblé par emboitage élastique sur une armature (34) de la structure (26).

3. Mât (16) selon la revendication 1 ou 2, dans lequel le carénage (28) définit un logement (40) de réception de l'armature (34), le carénage (28) comprenant une partie déformable (42) définissant une ouverture (44) d'accès au logement, l'ouverture (44) présentant une largeur transversale (e) plus faible qu'une largeur transversale de l'armature (34).

4. Mât (16) selon l'une quelconque des revendications 1 à 3, dans lequel le carénage (28) est réalisé à partir d'un matériau élastomère.

5. Mât (16) selon l'une quelconque des revendications 1 à 3, dans lequel le carénage (28) est réalisé à partir d'un matériau rigide, notamment une mousse syntactique comprenant une matrice en résine et des microbilles de verre incluses dans la matrice.

6. Mât (16) selon l'une quelconque des revendications 1 à 5, dans lequel le carénage (28) se compose d'une pluralité de segments (50) assemblés sur la structure (26) et alignés selon une direction parallèle à l'axe (Z-Z').

7. Mât (16) selon l'une quelconque des revendications 1 à 6, dans lequel une surface de contact (46) du carénage (28) sur la structure (26) comporte un adhésif réversible fixant le carénage (28) à la structure (26).

8. Bâtiment (10) marin ou sous-marin comportant au moins un mât (16) selon l'une quelconque des revendications 1 à 7.

## Patentansprüche

1. Mast (16), der dazu bestimmt ist, ein See- oder Unterseewasserschiff (10) auszustatten, der Mast (16) umfassend eine Metallstruktur (26), die sich entlang einer Achse (Z-Z') erstreckt, und eine Verkleidung (28), die außen in Bezug auf die Struktur (26) entlang einer Richtung senkrecht zu der Achse (Z-Z') angeordnet ist,
**dadurch gekennzeichnet, dass** die Verkleidung (28) abnehmbar an der Struktur (26) montiert ist, wobei abnehmbar so zu verstehen ist, dass die Verkleidung (28) von der Struktur (26) abgenommen werden kann, ohne die Verkleidung (28) oder die Struktur (26) zu beschädigen, die Struktur (26) umfassend einen Pfosten (60),
der sich in einer Richtung parallel zu der Achse (Z-Z) erstreckt, die Struktur (26) umfassend eine Vielzahl von Halterungen (62), die von dem Pfosten (60) hervorstehen, wobei die Verkleidung (28) einen Schlitz (56) definiert, der die Halterungen (62) aufnimmt, wobei die Halterungen (62) die Verkleidung (28) an der Struktur (26) halten, wobei jede Halterung (62) mindestens eine Befestigungsöffnung (64) definiert, wobei die Verkleidung (28) mindestens eine Öffnung (58) definiert, die angepasst ist, um in die Befestigungsöffnung (64) zu münden, wenn die Verkleidung (28) an der Struktur (26) montiert ist, wobei die Befestigungsöffnung (64) und die Öffnungen (58) geeignet sind, um ein Element (66) zur Befestigung der Verkleidung (28) an der Struktur (26) aufzunehmen.

2. Mast (16) nach Anspruch 1, wobei die Verkleidung (28) durch elastisches Aufstecken auf einen Rahmen (34) der Struktur (26) zusammengebaut ist.

3. Mast (16) nach Anspruch 1 oder 2, wobei die Verkleidung (28) eine Aufnahme (40) für das Gestänge (34) definiert, wobei die Verkleidung (28) einen verformbaren Teil (42) umfasst, der eine Öffnung (44) für den Zugang zu der Aufnahme definiert, wobei die Öffnung (44) eine Querbreite (e) aufweist, die kleiner ist als eine Querbreite des Gestänges (34).

4. Mast (16) nach einem der Ansprüche 1 bis 3, wobei die Verkleidung (28) aus einem elastomeren Material gefertigt ist.

5. Mast (16) nach einem der Ansprüche 1 bis 3, wobei die Verkleidung (28) aus einem starren Material gefertigt ist, insbesondere aus einem syntaktischen Schaumstoff, umfassend eine Harzmatrix und in der Matrix eingeschlossene Glasmikrokugeln.

6. Mast (16) nach einem der Ansprüche 1 bis 5, wobei die Verkleidung (28) aus einer Vielzahl von Segmenten (50) besteht, die an der Struktur (26) zusammengesetzt und in einer Richtung parallel zu der Achse (Z-Z') ausgerichtet sind.

7. Mast (16) nach einem der Ansprüche 1 bis 6, wobei eine Kontaktfläche (46) der Verkleidung (28) an der Struktur (26) einen reversiblen Klebstoff umfasst, der die Verkleidung (28) an der Struktur (26) befestigt.

8. See- oder Unterwasserschiff (10), umfassend mindestens einen Mast (16) nach einem der Ansprüche 1 bis 7.

## Claims

1. A mast (16) intended to equip a marine or submarine vessel (10), the mast (16) comprising a metal structure (26) extending along an axis (Z-Z') and a fairing (28) arranged externally to the structure (26) in a direction normal to the axis (Z-Z'),
**characterized in that** the fairing (28) is removably assembled to the structure (26), removably meaning that the fairing (28) can be removed from the structure (26) in particular without damaging the fairing (28) or the structure (26), the structure (26) comprising a post (60) extending in a direction parallel to the axis (Z-Z'), the structure (26) including a plurality of supports (62) protruding from a post (60), the fairing (28) defining a notch (56) receiving the supports (62), the supports (62) keeping the fairing (28) against the structure (26), each support (62) defining at least one attachment orifice (64), the fairing (28) defining at least one opening (58) suitable for emerging on the attachment orifice (64) when the fairing (28) is assembled to the structure (26), the attachment orifice (64) and the openings (58) being able to receive an attachment member (66) of the fairing (28) to the structure (26).

2. The mast (16) according to claim 1, wherein the fairing (28) is assembled by resilient fitting on a frame (34) of the structure (26).

3. The mast (16) according to claim 1 or 2, wherein the fairing (28) defines a housing (40) for receiving the frame (34), the fairing (28) comprising a deformable part (42) defining an access opening (44) to the housing, the opening (44) having a transverse width (e) smaller than a transverse width of the frame (34).

4. The mast (16) according to any one of claims 1 to 3, wherein the fairing (28) is made from an elastomer material.

5. The mast (16) according to any one of claims 1 to 3, wherein the fairing (28) is made from a rigid material, in particular a syntactic foam comprising a matrix of resin and glass microbeads included in the matrix.

6. The mast (16) according to any one of claims 1 to 5, wherein the fairing (28) is made up of a plurality of segments (50) assembled on the structure (26) and aligned in a direction parallel to the axis (Z-Z').

7. The mast (16) according to any one of claims 1 to 6, wherein a contact surface (46) of the fairing (28) on the structure (26) includes a reversible adhesive attaching the fairing (28) to the structure (26).

8. A marine or submarine vessel (10) including at least one mast (16) according to any one of claims 1 to 7.
